# EUROPÄISCHE PATENTSCHRIFT

(11) **EP 3 540 883 B1**
(45) Veröffentlichungstag und Bekanntmachung des Hinweises auf die Patenterteilung: **04.05.2022**
(21) Anmeldenummer: 18162297.8
(22) Anmeldetag: 16.03.2018
(51) Int. Cl.: H02G 3/06

(54) **KABELFÜHRUNGSVERBINDER UND VERFAHREN ZUM VERBINDEN VON KABELFÜHRUNGSELEMENTEN**
CABLE GUIDANCE CONNECTOR AND METHOD FOR CONNECTING CABLE GUIDANCE ELEMENTS
MANCHON DE GUIDAGE DE CÂBLE ET PROCÉDÉ DE RACCORDEMENT DES ÉLÉMENTS DE GUIDAGE DE CÂBLE

(43) Veröffentlichungstag der Anmeldung: 18.09.2019
(73) Patentinhaber: Niedax GmbH & Co. KG, 53545 Linz/Rhein (DE)
(72) Erfinder: Kloft, Martin, 53545 Linz am Rhein (DE); Adams, Jörg, 53545 Linz am Rhein (DE); Tipmann, Andreas, 53545 Linz am Rhein (DE)
(74) Vertreter: Vossius & Partner Patentanwälte Rechtsanwälte mbB

(56) Entgegenhaltungen:
- EP-A1- 0 712 189
- EP-A1- 2 884 609
- WO-A1-2010/059743
- WO-A1-2017/147256
- DE-U1-202014 104 352
- US-A- 5 332 866
- Obo Anonymous: "OBO BETT. Verbinder f.Kabelrinne 200mm f.110mm RLVL 110 FT", , 29 April 2015 (2015-04-29), XP055655435, Retrieved from the Internet: URL:https://www.amazon.de/BETT-Verbinder-f -Kabelrinne-200mm-f-110mm/dp/B00WU7ADE4/re f=pd_rhf_se_p_img_5?_encoding=UTF8&psc=1&r efRID=B3Y023NWBZWAH9C3JG5V [retrieved on 2020-01-08]
- Obo Bettermann: "Kabeltrag-Systeme KTS Katalog 2017- page 283", , 27 March 2017 (2017-03-27), page 283, XP055715327, Retrieved from the Internet: URL:https://obo-bettermann.com/dam/getfile .php?original_filename=EV/II1JRS9P5A5EJJOK 4MOL25RK-Katalog-KTS-de-2017.pdf [retrieved on 2020-07-16]

## Beschreibung

### TECHNISCHES GEBIET

Die Erfindung betrifft Kabelführungen wie Kabelkanäle oder Kabelrinnen sowie Vorrichtungen und Verfahren für Kabelführungen. Die Erfindung betrifft Kabelführungsverbinder zum Verbinden von Kabelführungselementen, insbesondere von Kabelkanälen oder Kabelrinnen, sowie Verfahren zum Verbinden von Kabelführungselementen.

### HINTERGRUND

Kabelführungen finden weithin Einsatz, beispielsweise zum Führen von Kommunikationsleitungen oder in der elektrischen Beleuchtungstechnik. Kabelführungen können verschiedene Ausgestaltungen aufweisen, beispielsweise in Form von Kabelkanälen oder Kabelrinnen.

Zur Erleichterung der Installation, Vorratshaltung und Wartung sind Kabelführungen häufig aus mehreren Kabelführungselementen zusammengesetzt, die miteinander verbunden werden müssen. Zum Verbinden von Kabelführungselementen können Kabelführungsverbinder verwendet werden. Verschiedene Ausgestaltungen von Kabelführungsverbindern sind in der Technik bekannt.

Die WO 00/25403 A1 offenbart ein Winkelverbindungselement für eine Führung, das eine Winkeleinstellung erlaubt.

Die EP 1 482 615 A1 offenbart einen Krümmungsadapter für Kabel in einer offenen Kabelrinne.

Die EP 0 315 023 A2 offenbart ein Verbindungselement für ein Kabelführungssystem.

Die EP 0 578 459 A1 offenbart ein Kopplungselement mit Einstellmöglichkeit.

Die EP 0 823 762 A1 offenbart einen Eckverbinder für einen Kabelkanal.

Die DE 20 2014 104 352 U1 offenbart einen Kabeltragsegmentverbinder, der einen rechten und linken Seitenholm aufweist.

Die EP 2 884 609 A1 offenbart eine Vorrichtung zum Verbinden von Kabelrinnen.

Die WO 2017/147256 A1 offenbart eine Anordnung mit unterschiedlich ausgestalteten Verbinderelementen an Innen- und Außenseiten von Kabelrinnen. Dieses Dokument offenbart Kabelführungsverbinder mit einem ersten Verbinderabschnitt, einem zweiten Verbinderabschnitt und einem dazwischen angeordneten Kantenschutz. Zwischen Kantenschutz und Verbinderabschnitt ist jeweils eine Schwächungszone angeordnet, die eine Folge von entlang einer Linie angeordneten Durchbrüchen aufweist.

Die EP 0 712 189 A1 offenbart ein System mit im Wesentlichen flachen Teilen und geschwächten Abschnitten zum Auffalten von Teilen.

Die WO 2010/059743 A1 offenbart ein Element für Kabelführungen, das für eine Anordnung mit unterschiedlichen Winkeln ausgelegt ist.

Die US 5 332 866 A offenbart eine Schutzanordnung für Kabel und eine Verbinderanordnung.

Die Website URL:https://www.amazon.de/BETT-Verbinder-f-Kabelrinne-200mmf-110mm/dpB00WU7ADE4/ref=pd_rhf_se_pJmg_5?_encoding=UTF8&psc=1 &refRID=B3Y023NWBZWAH9C3JG5V, die von der Prüfungsabteilung am 8. Januar 2020 abgerufen wurde, und Obo Bettermann: "Kabeltrag-Systeme KTS Katalog 2017-page 283", 27. März 2017 (2017-03-27), Seite 283, XP055715327, zeigen jeweils einen Verbinder für eine Kabelrinne.

Herkömmliche Kabelführungsverbinder weisen verschiedene Nachteile auf. Typischerweise sind herkömmliche Kabelführungsverbinder nur für eine spezifische Verwendung entweder an einer Innenecke oder an einer Außenecke oder an einer Seitenfläche einer Kabelführung eingerichtet. Die Verwendung unterschiedlicher Kabelführungsverbinder für die unterschiedlichen Montagestellen erhöht den mit der Vorratshaltung verbundenen Aufwand und erschwert die Montage. Manche herkömmlichen Kabelführungsverbinder weisen eine komplexe Ausgestaltung auf, bei der mehrere Komponenten scharnierförmig miteinander verbunden sind, so dass ihre Herstellung kompliziert und teuer ist. Viele herkömmliche Kabelführungsverbinder insbesondere zur Verwendung an Ecken weisen scharfe Kanten an der zu den Kabeln zeigenden Seite auf, die das Beschädigungsrisiko erhöhen.

Der Erfindung liegt die Aufgabe zugrunde, verbesserte Kabelführungsverbinder und Verfahren zum Verbinden von Kabelführungselementen bereitzustellen. Insbesondere ist es wünschenswert, Kabelführungsverbinder mit einer einfachen Ausgestaltung bereitzustellen, die an verschiedenen Montagestellen, beispielsweise Innenecken, Außenecken und Seitenflächen, einsetzbar sind, einfach herstellbar sind und das Risiko einer Beschädigung von Kabeln verringern.

### KURZE BESCHREIBUNG DER ERFINDUNG

Erfindungsgemäß werden ein Kabelführungsverbinder und ein Verfahren mit den in den unabhängigen Ansprüchen angegebenen Merkmalen bereitgestellt. Die abhängigen Ansprüche definieren Ausführungsbeispiele.

Ein erfindungsgemäßer Kabelführungsverbinder weist einen ersten Verbinderabschnitt und einen zweiten Verbinderabschnitt, einen Kantenschutz, der zwischen dem ersten Verbinderabschnitt und dem zweiten Verbinderabschnitt angeordnet ist und eine gekrümmte Oberfläche aufweist, und wenigstens eine Schwächungszone auf. Die wenigstens eine Schwächungszone ist konfiguriert, ein Verbiegen wenigstens eines Verbinderabschnitts relativ zum Kantenschutz zu ermöglichen, wobei der wenigstens eine Verbinderabschnitt um die wenigstens eine Schwächungszone in zwei unterschiedliche Richtungen biegbar ist, um eine Montage des Kabelführungsverbinders sowohl an einer Innenecke als auch an einer Außenecke einer Kabelführung zu erlauben.

Der erfindungsgemäße Kabelführungsverbinder kann an verschiedenen Montagepositionen, insbesondere an Innenecken, Außenecken und Seitenflächen einer Kabelführung montiert werden, um Kabelführungselemente miteinander zu verbinden. Der erfindungsgemäße Kabelführungsverbinder kann in einfacher Weise, insbesondere durch manuelles Biegen um die wenigstens eine Schwächungszone, zwischen den Konfiguration für die unterschiedlichen Montagepositionen überführt werden. Durch den in den Kabelführungsverbinder integrierten und zwischen den ersten und zweiten Verbinderabschnitten positionierten Kantenschutz kann das Risiko einer Beschädigung eines Kabels reduziert werden. Die gekrümmte Oberfläche des Kantenschutzes kann auch beim Verbiegen des ersten und zweiten Verbinderabschnitts um die wenigstens eine Schwächungszone im Wesentlichen ihre Form beibehalten, so dass auch an einer Ecke des Kabelkanals mit dem Kabelführungsverbinder verhindert wird, dass ein Kabel an einer scharfen Kante oder Ecke anliegt.

Die Kabelführung kann ein Kabelkanal, insbesondere ein Bodenkabelkanal, ein Deckenkabelkanal oder ein Wandkabelkanal, oder eine Kabelrinne sein.

Die Kabelführung kann metallische Kabelführungselemente und/oder nicht-metallische Kabelführungselemente, insbesondere Kabelführungselemente aus Kunststoff, aufweisen.

Die wenigstens eine Schwächungszone kann eine Schwächungslinie aufweisen oder kann eine Schwächungslinie sein. Die Schwächungslinie weist eine Linie mit reduzierter Dicke oder eine Folge von entlang einer Linie angeordneten Durchbrüchen in dem Kabelführungsverbinder auf.

Der Kabelführungsverbinder weist ein erstes Ende, an dem der erste Verbinderabschnitt angeordnet ist, und ein zweites Ende auf, an dem der zweite Verbinderabschnitt angeordnet ist. In einer Richtung vom ersten Ende zum zweiten Ende weist der Kabelführungsverbinder den ersten Verbinderabschnitt, eine erste Schwächungszone, den Kantenschutz, optional eine zweite Schwächungszone und den zweiten Verbinderabschnitt auf.

Jede Schwächungszone kann mehrere entlang einer Linie angeordnete Durchbrüche aufweisen, um die Biegesteifigkeit des Kabelführungsverbinders lokal entlang der Linie zu reduzieren.

Der Kabelführungsverbinder kann eine erste Konfiguration aufweisen, in der der erste Verbinderabschnitt und der zweite Verbinderabschnitt koplanar sind und der Kantenschutz an einer ersten Seite einer durch den ersten Verbinderabschnitt und den zweiten Verbinderabschnitt definierten Ebene hervorragt.

Der wenigstens eine Verbinderabschnitt kann aus der ersten Konfiguration um die wenigstens eine Schwächungszone in Richtung der ersten Seite biegbar sein, um den Kabelführungsverbinder für eine Verwendung an der Innenecke vorzubereiten.

Der wenigstens eine Verbinderabschnitt kann aus der ersten Konfiguration um die wenigstens eine Schwächungszone in Richtung einer zur ersten Seite entgegengesetzten zweiten Seite biegbar ist, um den Kabelführungsverbinder für eine Verwendung an der Außenecke vorzubereiten.

Der Kabelführungsverbinder kann in der ersten Konfiguration zum Verbinden von koplanar ausgerichteten Kabelführungselementen an einer Seite der Kabelführung konfiguriert sein.

Der erste Verbinderabschnitt, der zweite Verbinderabschnitt, der Kantenschutz und die wenigstens eine Schwächungszone können einstückig ausgebildet sind.

Der Kabelführungsverbinder ist ein Metallteil, nämlich ein Blechteil.

Der Kabelführungsverbinder kann ein Stanzteil sein, in das der Kantenschutz eingeformt ist.

Der Kabelführungsverbinder kann unter Verwendung von Laserschneiden oder anderen Herstellungstechniken hergestellt sein.

Die wenigstens eine Schwächungszone weist eine zwischen dem ersten Verbinderabschnitt und dem Kantenschutz angeordnete erste Schwächungszone und eine zwischen dem zweiten Verbinderabschnitt und dem Kantenschutz angeordnete zweite Schwächungszone auf.

Die wenigstens eine Schwächungszone kann ein manuelles Verbiegen des ersten Verbinderabschnitts und/oder des zweiten Verbinderabschnitts relativ zum Kantenschutz ermöglichen.

Um den Kabelführungsverbinder für eine Verwendung an einer Innenecke oder einer Außenecke der Kabelführung vorzubereiten, kann sowohl der erste Verbinderabschnitt um die erste Schwächungszone als auch der zweite Verbinderabschnitt um die zweite Schwächungszone relativ zu dem Kantenschutz gebogen werden.

Der Kabelführungsverbinder kann ein Verbiegen des ersten Verbinderabschnitts und des zweiten Verbinderabschnitts um beliebige Winkel ermöglichen.

Beim Verbiegen kann die planare Ausgestaltung des ersten Verbinderabschnitts und des zweiten Verbinderabschnitts jeweils erhalten bleiben, so dass nur die Anordnung des ersten Verbinderabschnitts und des zweiten Verbinderabschnitts zum Kantenschutz geändert, die Verbinderabschnitte aber im Wesentlichen eben bleiben.

Der erste Verbinderabschnitt und der zweite Verbinderabschnitt können jeweils wenigstens eine Öffnung zum Durchführen eines Befestigungselements aufweisen.

Der erste Verbinderabschnitt und der zweite Verbinderabschnitt können jeweils wenigstens zwei Langlöcher zum Durchführen von Befestigungselementen aufweisen.

Die wenigstens zwei Langlöcher können parallel zu einer Längsachse des Kabelführungsverbinders und transversal zu der wenigstens einen Schwächungszone angeordnet sein.

Die wenigstens eine Schwächungszone kann so konfiguriert sein, dass beim Verbiegen des wenigstens eines Verbinderabschnitts relativ zum Kantenschutz der Kantenschutz seine Form beibehält.

Die wenigstens eine Schwächungszone kann so konfiguriert sein, dass beim Verbiegen des wenigstens eines Verbinderabschnitts relativ zum Kantenschutz der Verbinderabschnitt seine Form beibehält.

Der erste Verbinderabschnitt und der zweite Verbinderabschnitt können jeweils plattenförmig sein. Der erste Verbinderabschnitt und der zweite Verbinderabschnitt weisen dieselbe Dicke auf. Der Kantenschutz ist ein gekrümmter Abschnitt eines Blechs, wobei die Dicke am Kantenschutz gleich der der Dicke des ersten Verbinderabschnitts und des zweiten Verbinderabschnitts ist.

Eine Kabelführung nach einem Ausführungsbeispiel weist mehrere Kabelführungselemente und wenigstens einen erfindungsgemäßen Kabelführungsverbinder zum Verbinden der Kabelführungselemente auf.

Die Kabelführung kann wenigstens einen ersten Kabelführungsverbinder aufweisen, der an einer Innenecke der Kabelführung montiert ist. Alternativ oder zusätzliche kann die Kabelführung wenigstens einen zweiten Kabelführungsverbinder aufweisen, der an einer Außenecke der Kabelführung montiert ist. Alternativ oder zusätzliche kann die Kabelführung wenigstens einen dritten Kabelführungsverbinder aufweisen, der an einer Seitenfläche der Kabelführung beabstandet von Ecken der Kabelführung montiert ist. Der wenigstens eine erste Kabelführungsverbinder, der wenigstens eine zweite Kabelführungsverbinder und der wenigstens eine dritte Kabelführungsverbinder jeweils erfindungsgemäße Kabelführungsverbinder sein.

Die Kabelführung kann ein Kabelkanal, insbesondere ein Bodenkabelkanal, ein Deckenkabelkanal oder ein Wandkabelkanal, oder eine Kabelrinne sein.

Die Kabelführung kann metallische Kabelführungselementen und/oder nicht-metallische Kabelführungselementen, insbesondere Kabelführungselemente aus Kunststoff, aufweisen.

Der Kabelführungsverbinder besteht aus Metall.

Ein Verfahren zum Verbinden von Kabelführungselementen weist die folgenden Schritte auf: Vorbereiten eines Kabelführungsverbinders zum Befestigen mehrerer Kabelführungselementen aneinander, wobei der Kabelführungsverbinder einen ersten Verbinderabschnitt und einen zweiten Verbinderabschnitt, einen Kantenschutz, der zwischen dem ersten Verbinderabschnitt und dem zweiten Verbinderabschnitt angeordnet ist und eine gekrümmte Oberfläche aufweist, und wenigstens eine Schwächungszone aufweist; und Befestigen von wenigstens zwei Kabelführungselementen aneinander unter Verwendung des vorbereiteten Kabelführungsverbinders.

Das Vorbereiten des Kabelführungsverbinders kann abhängig von einer Montagestelle des Kabelführungsverbinders einen der folgenden Schritte aufweisen:
- Verbiegen wenigstens eines Verbinderabschnitts relativ zum Kantenschutz um die wenigstens eine Schwächungszone in einer ersten Richtung für eine Montage an einer Innenecke der Kabelführung,
- Verbiegen wenigstens eines Verbinderabschnitts relativ zum Kantenschutz um die wenigstens eine Schwächungszone in einer zu der ersten Richtung entgegengesetzten zweiten Richtung für eine Montage an einer Außenecke der Kabelführung,
- Verwendung des Kabelführungsverbinders in einer Konfiguration, in der der erste Verbinderabschnitt und der zweite Verbinderabschnitt koplanar sind, für eine Montage an einer Seitenfläche der Kabelführung.

Bei dem Verfahren kann die Kabelführung ein Kabelkanal, insbesondere ein Bodenkabelkanal, ein Deckenkabelkanal oder ein Wandkabelkanal, oder eine Kabelrinne sein.

Der Kabelführungsverbinder kann zum Verbinden von metallischen Kabelführungselementen oder nicht-metallische Kabelführungselementen, insbesondere Kabelführungselementen aus Kunststoff, verwendet werden. Zur Verbindung von nicht-metallische Kabelführungselementen wird vorteilhaft ein nicht-metallischer Kabelführungsverbinder, insbesondere aus Kunststoff, verwendet.

Der bei dem Verfahren verwendete Kabelführungsverbinder kann der erfindungsgemäße Kabelführungsverbinder sein.

Bei dem Verfahren kann wenigstens ein erster erfindungsgemäßer Kabelführungsverbinder an einer Innenecke der Kabelführung montiert werden. Alternativ oder zusätzlich kann wenigstens ein zweiter erfindungsgemäßer Kabelführungsverbinder an einer Außenecke der Kabelführung montiert werden. Alternativ oder zusätzlich kann wenigstens ein dritter erfindungsgemäßer Kabelführungsverbinder an einer Seitenfläche der Kabelführung montiert werden.

Bei dem Verfahren kann die wenigstens eine Schwächungszone eine Schwächungslinie aufweisen oder kann eine Schwächungslinie sein. Jede Schwächungszone kann mehrere entlang einer Linie angeordnete Durchbrüche aufweisen, um die Biegesteifigkeit des Kabelführungsverbinders lokal zu reduzieren.

Der bei dem Verfahren verwendete Kabelführungsverbinder kann eine erste Konfiguration aufweisen, in der der erste Verbinderabschnitt und der zweite Verbinderabschnitt koplanar sind und der Kantenschutz an einer ersten Seite einer durch den ersten Verbinderabschnitt und den zweiten Verbinderabschnitt definierten Ebene hervorragt.

Bei dem Verfahren kann der wenigstens eine Verbinderabschnitt aus der ersten Konfiguration um die wenigstens eine Schwächungszone in Richtung der ersten Seite gebogen werden, um den Kabelführungsverbinder für eine Verwendung an der Innenecke vorzubereiten.

Bei dem Verfahren kann der wenigstens eine Verbinderabschnitt aus der ersten Konfiguration um die wenigstens eine Schwächungszone in Richtung einer zur ersten Seite entgegengesetzten zweiten Seite gebogen werden, um den Kabelführungsverbinder für eine Verwendung an der Außenecke vorzubereiten.

Bei dem Verfahren kann der Kabelführungsverbinder in der ersten Konfiguration zum Verbinden von koplanaren Kabelführungselementen an einer Seite der Kabelführung konfiguriert sein.

Der bei dem Verfahren verwendete Kabelführungsverbinder kann ein Blechteil sein.

Der bei dem Verfahren verwendete Kabelführungsverbinder kann ein Stanzteil sein, in das der Kantenschutz eingeformt ist.

Der bei dem Verfahren verwendete Kabelführungsverbinder kann unter Verwendung von Laserschneiden oder andere Herstellungstechniken hergestellt sein.

Bei dem Verfahren kann die wenigstens eine Schwächungszone eine zwischen dem ersten Verbinderabschnitt und dem Kantenschutz angeordnete erste Schwächungszone und eine zwischen dem zweiten Verbinderabschnitt und dem Kantenschutz angeordnete zweite Schwächungszone aufweisen.

Bei dem Verfahren kann der erste Verbinderabschnitts und/oder der zweite Verbinderabschnitts relativ zum Kantenschutz manuell gebogen werden.

Um den Kabelführungsverbinder für eine Verwendung an einer Innenecke oder einer Außenecke der Kabelführung vorzubereiten, kann sowohl der erste Verbinderabschnitt um die erste Schwächungszone als auch der zweite Verbinderabschnitt um die zweite Schwächungszone relativ zu dem Kantenschutz gebogen werden.

Der bei dem Verfahren verwendete Kabelführungsverbinder kann ein Verbiegen des ersten Verbinderabschnitts und des zweiten Verbinderabschnitts um beliebige Winkel ermöglichen.

Bei dem Verfahren können der erste Verbinderabschnitt und der zweite Verbinderabschnitt jeweils wenigstens eine Öffnung zum Durchführen eines Befestigungselements aufweisen.

Der erste Verbinderabschnitt und der zweite Verbinderabschnitt können jeweils wenigstens zwei Langlöcher zum Durchführen von Befestigungselementen aufweisen.

Die wenigstens zwei Langlöcher können parallel zu einer Längsachse des Kabelführungsverbinders und transversal zu der wenigstens einen Schwächungszone angeordnet sein.

Die wenigstens eine Schwächungszone kann so konfiguriert sein, dass beim Verbiegen des wenigstens eines Verbinderabschnitts relativ zum Kantenschutz der Kantenschutz seine Form beibehält.

Die wenigstens eine Schwächungszone kann so konfiguriert sein, dass beim Verbiegen des wenigstens eines Verbinderabschnitts relativ zum Kantenschutz der Kantenschutz seine Form beibehält.

Bei dem Verfahren können der erste Verbinderabschnitt und der zweite Verbinderabschnitt jeweils plattenförmig sein. Der erste Verbinderabschnitt und der zweite Verbinderabschnitt weisen dieselbe Dicke auf. Der Kantenschutz ist ein gekrümmter Abschnitt eines Blechs, wobei die Dicke am Kantenschutz gleich der der Dicke des ersten Verbinderabschnitts und des zweiten Verbinderabschnitts ist.

Verschiedene Wirkungen und Vorteile werden durch den erfindungsgemäßen Kabelführungsverbinder und das erfindungsgemäße Verfahren erreicht. Der Kabelführungsverbinder weist eine einfache Ausgestaltung auf und ist kostengünstig herstellbar. Der Kabelführungsverbinder kann an verschiedenen Montagestellen, wie Innenecken, Außenecken und Seitenflächen, eingesetzt werden, wobei der Kabelführungsverbinder durch einfaches, insbesondere manuelles Umbiegen zur Verwendung an Innenecken oder Außenecken vorbereitet werden kann. Der in den Kabelführungsverbinder integrierte Kantenschutz verringert das Risiko einer Beschädigung von Kabeln.

Die erfindungsgemäßen Vorrichtungen und Verfahren können bei Kabelkanälen, Kabelrinnen oder anderen Kabelführungen eingesetzt werden. Beispielhafte Anwendungsgebiete sind Kabelführungen für Kommunikationsleitungen sowie Kabelführungen für Lichtinstallationen oder andere elektrische Einrichtungen, ohne hierauf beschränkt zu sein.

### KURZBESCHREIBUNG DER FIGUREN

Ausführungsbeispiele der Erfindung werden unter Bezugnahme auf die Figuren ausführlich beschrieben, wobei identische oder ähnliche Bezugszeichen identische oder ähnliche Elemente bezeichnen.
Fig. 1 ist eine Perspektivansicht eines Kabelführungsverbinders nach einem Ausführungsbeispiel in einer ersten Konfiguration.
Fig. 2 ist eine Draufsicht des Kabelführungsverbinders in einer Richtung senkrecht zu Schwächungslinien.
Fig. 3 ist eine Draufsicht des Kabelführungsverbinders in einer Richtung parallel zu Schwächungslinien.
Fig. 4 ist eine Perspektivansicht des Kabelführungsverbinders in einer zweiten Konfiguration.
Fig. 5 ist eine Draufsicht des Kabelführungsverbinders in der zweiten Konfiguration im montierten Zustand.
Fig. 6 ist eine Perspektivansicht des Kabelführungsverbinders in einer dritten Konfiguration.
Fig. 7 ist eine Draufsicht des Kabelführungsverbinders in der dritten Konfiguration.
Fig. 8 ist eine Draufsicht des Kabelführungsverbinders in der dritten Konfiguration im montierten Zustand.
Fig. 9 ist eine Draufsicht eines Kabelkanals mit mehreren Kabelführungsverbindern nach einem Ausführungsbeispiel.
Fig. 10 ist eine Draufsicht eines Kabelkanals mit mehreren Kabelführungsverbindern nach einem Ausführungsbeispiel.
Fig. 11 ist eine weitere Draufsicht des Kabelführungsverbinders in der zweiten Konfiguration.

### BESCHREIBUNG VORTEILHAFTER AUSFÜHRUNGSBEISPIELE

Ausführungsbeispiele der Erfindung werden unter Bezugnahme auf die Figuren beschrieben. Auch wenn Ausführungsbeispiele im Kontext spezifischer Kabelführungen, beispielsweise eine Kabelkanals oder einer Kabelrinne, beschrieben werden, sind die erfindungsgemäßen Kabelführungsverbinder und Verfahren nicht hierauf beschränkt. Die Merkmale unterschiedlicher Ausführungsbeispiele können miteinander kombiniert werden, sofern dies in der nachfolgenden Beschreibung nicht ausdrücklich ausgeschlossen ist.

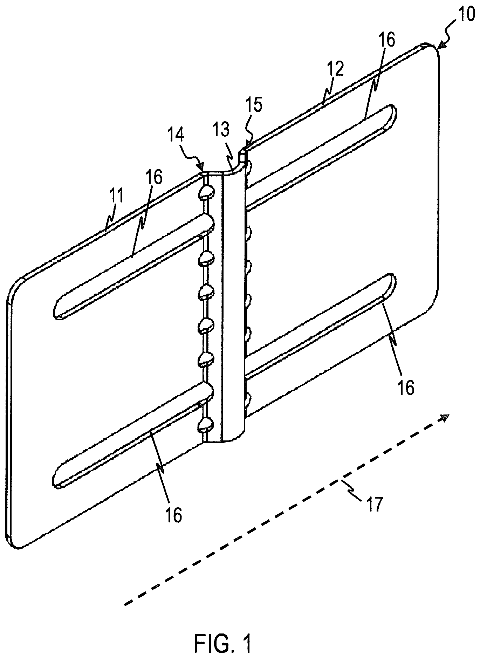

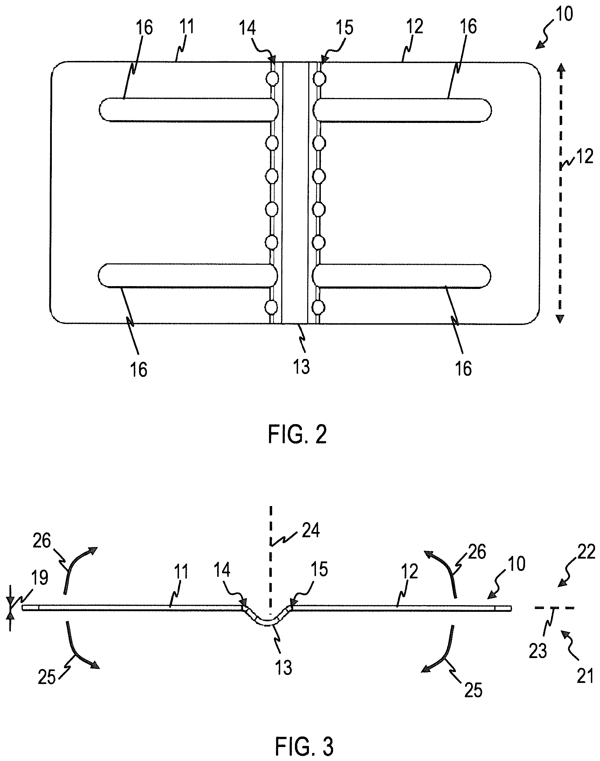

Fig. 1 ist eine Perspektivansicht eines Kabelführungsverbinders 10 nach einem Ausführungsbeispiel in einer ersten Konfiguration. Fig. 2 und Fig. 3 zeigen Draufsichten des Kabelführungsverbinders 10 aus unterschiedlichen Richtungen.

Der Kabelführungsverbinder 10 ist einstückig aus Metall, nämlich als Blechteil, gebildet. Der Kabelführungsverbinder 10 kann als Stanzteil und/oder durch andere spanende oder nicht-spanende Fertigungsmethoden hergestellt werden, wobei optional Umformungsoperationen zum Erzeugen eines integrierten Kantenschutzes 13 ausgeführt werden können.

Der Kabelführungsverbinder 10 weist einen ersten Verbinderabschnitt 11 und einen zweiten Verbinderabschnitt 12 auf. In der in Fig. 1 bis Fig. 3 dargestellten ersten Konfiguration des Kabelführungsverbinders 10 weist der Kabelführungsverbinder 10 eine Längsachse 17 auf. Die Längsachse 17 erstreckt sich entlang der längsten Seite des Kabelführungsverbinders 10. Der erste Verbinderabschnitt 11 und der zweite Verbinderabschnitt 12 sind entlang der Längsachse 17 hintereinander und voneinander beabstandet angeordnet.

Der Kabelführungsverbinder 10 weist entlang der Längsachse 17 den ersten Verbinderabschnitt 11, eine erste Schwächungszone 14, einen Kantenschutz 13, eine optionale zweite Schwächungszone 15 und den zweiten Verbinderabschnitt 12 auf. Die erste Schwächungszone 14 und die zweite Schwächungszone 15 erstrecken sich jeweils entlang einer Linie, die parallel zu einem Scheitel einer gekrümmten Oberfläche des Kantenschutzes 13 verläuft.

Der Kabelführungsverbinder 10 weist den Kantenschutz 13 auf. Der Kantenschutz 13 ist zwischen dem ersten Verbinderabschnitt 11 und dem zweiten Verbinderabschnitt 12 angeordnet und kann integral mit dem ersten Verbinderabschnitt 11 und dem zweiten Verbinderabschnitt 12 ausgebildet sein.

Der Begriff "Kantenschutz", wie er hier und in der Technik verwendet wird, bezeichnet eine Struktur mit einer gekrümmten Oberfläche, die im montierten Zustand eine Kante überdeckt. Der Kantenschutz dient dazu, Kabel, Personen oder andere empfindliche Objekte vor einer Beschädigung durch die Kante zu schützen. Der Kantenschutz kann somit im montierten Zustand als Kabelschutz dienen, wenn er an einer Innenseite der Kabelführung montiert ist, oder zum Schutz von Personen, wenn er beispielsweise an der Außenseite der Kabelführung montiert ist.

Der Kantenschutz 13 weist eine gekrümmte Oberfläche auf, die in der ersten Konfiguration des Kabelführungsverbinders 10 bauchig aus einer durch den ersten Verbinderabschnitt 11 und den zweiten Verbinderabschnitt 12 definierten Ebene 23 hervorragt. Die gekrümmte Oberfläche des Kantenschutzes 13 ist teilkreisförmig. Ein Scheitel des Kantenschutzes 13 kann sich transversal, insbesondere senkrecht zur Längsrichtung des Kabelführungsverbinders 10 erstrecken, wenn der Kabelführungsverbinder 10 in seiner ersten Konfiguration ist, in der der erste Verbinderabschnitt 11 und der zweiten Verbinderabschnitt 12 koplanar angeordnet sind.

Der Kabelführungsverbinder 10 weist eine erste und eine zweite Schwächungszone auf. Bei dem dargestellten Ausführungsbeispiel weist der Kabelführungsverbinder 10 eine erste Schwächungszone 14 zwischen dem ersten Verbinderabschnitt 11 und dem Kantenschutz 13 sowie eine zweite Schwächungszone 15 zwischen dem zweiten Verbinderabschnitt 12 und dem Kantenschutz 13 auf. Die erste Schwächungszone 14 und die zweite Schwächungszone 15 können sich jeweils linienartig über die gesamte Breite 18 des Kabelführungsverbinders 10 erstrecken. Die erste Schwächungszone 14 und die zweite Schwächungszone 15 können quer, insbesondere senkrecht zur Längsachse 17 und/oder parallel zu einem Scheitel des Kantenschutzes 13 angeordnet sein.

Die erste Schwächungszone 14 und die zweite Schwächungszone 15 können durch eine Folge von Ausnehmungen in dem Kabelführungsverbinder 10 gebildet sein. Die Ausnehmungen können durch Stanzen, Laserschneiden oder auf andere Weise gebildet sein. Die erste Schwächungszone 14 und die zweite Schwächungszone 15 können auch auf andere Weise, beispielsweise durch eine Linie mit geringerer Dicke als die Dicke 19 der Verbinderabschnitte 11, 12 und des Kantenschutzes 13, in dem Kabelführungsverbinder 10 gebildet sein.

Die erste Schwächungszone 14 erlaubt ein Verbiegen des ersten Verbinderabschnitts 11 relativ zum Kantenschutz 13 um die erste Schwächungszone 14. Dabei kann der erste Verbinderabschnitts 11 relativ zum Kantenschutz 13 sowohl in einer ersten Richtung 25 als auch in einer zweiten Richtung 26 gebogen werden. Durch ein Biegen des erste Verbinderabschnitts 11 relativ zum Kantenschutz 13 in der ersten Richtung 25 wird der erste Verbinderabschnitt 11 in Richtung einer ersten Seite 21 des Kabelführungsverbinders 10 gebogen, an der der Kantenschutz 13 hervorragt. Auf diese Weise kann der Kabelführungsverbinder 10 zur Montage an einer Innenecke eines Kabelkanals oder einer anderen Kabelführung vorbereitet werden, wie nachfolgend ausführlicher beschrieben wird. Durch ein Biegen des erste Verbinderabschnitts 11 relativ zum Kantenschutz 13 in der zweiten Richtung 26 wird der erste Verbinderabschnitt 11 in Richtung einer zweiten Seite 22 des Kabelführungsverbinders 10 gebogen, die zu der ersten Seite 21 entgegengesetzt ist. Auf diese Weise kann der Kabelführungsverbinder 10 zur Montage an einer Außenecke eines Kabelkanals oder einer anderen Kabelführung vorbereitet werden, wie nachfolgend ausführlicher beschrieben wird.

Die zweite Schwächungszone 15 erlaubt ein Verbiegen des zweiten Verbinderabschnitts 12 relativ zum Kantenschutz 13 um die zweite Schwächungszone 15. Dabei kann der zweite Verbinderabschnitts 12 relativ zum Kantenschutz 13 sowohl in der ersten Richtung 25 als auch in der zweiten Richtung 26 gebogen werden, wie oben für den ersten Verbinderabschnitt 11 ausführlicher erläutert wurde.

Der Begriff "Innenecke" einer Kabelführung, wie er hier verwendet wird, bezeichnet eine an der Innenseite der Kabelführung angeordnete Ecke.

Der Begriff "Außenecke" einer Kabelführung, wie er hier verwendet wird, bezeichnet eine an der Außenseite der Kabelführung angeordnete Ecke.

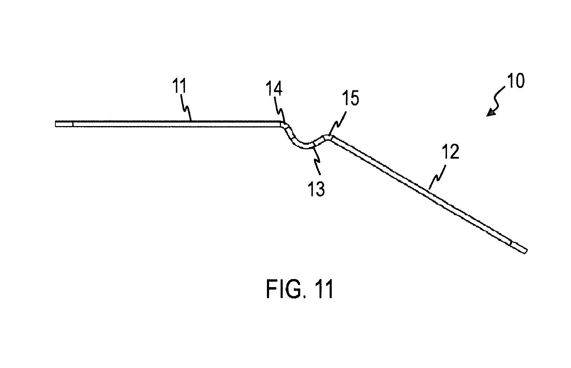

Eine Ecke der Kabelführung kann einen Innenwinkel und/oder Außenwinkel aufweisen, der 90° sein kann, kann aber auch größere oder kleinere Innenwinkel und/oder Außenwinkel aufweisen, wie dies in Fig. 11 dargestellt ist. Beispielsweise kann der erfindungsgemäße Kabelführungsverbinder 10 zur Verbindung von Kabelführungselementen konfiguriert sein, die in beliebigen Winkeln zwischen 60° und 180°, bevorzugt zwischen 75° und 180° und insbesondere 90 und 180°relativ zueinander angeordnet sind. D.h., der Kabelführungsverbinder 10 kann sowohl für Innenecken als auch Außenecken aus seiner planaren Grundkonfiguration entsprechend der Darstellung in Fig. 3, in der der Winkel 180° beträgt, in beide Richtungen gebogen werden (in die zweite und dritte Konfiguration), so dass zwischen den beiden Verbinderabschnitten 11 und 12 ein Winkel im Bereich zwischen 60° und 180°, bevorzugt zwischen 75° und 180° und insbesondere 90 und 180° relativ zueinander vorliegt.

Der Kabelführungsverbinder 10 kann eine Mittelebene 24 aufweisen, die durch einen Scheitel des Kantenschutzes 13 und senkrecht zur Ebene 23 verläuft. Der Kabelführungsverbinder 10 kann spiegelsymmetrisch zur Mittelebene 24 sein, ohne hierauf beschränkt zu sein. Der Kabelführungsverbinder 10 kann nicht-spiegelsymmetrisch zur Ebene 23 sein.

Der Kabelführungsverbinder 10 kann Öffnungen 16 für einen Durchtritt von Befestigungselementen aufweisen. Dabei kann sowohl der erste Verbinderabschnitt 11 als auch der zweite Verbinderabschnitt 12 jeweils mindestens eine und vorteilhaft mindestens zwei Öffnungen 16 aufweisen. Die Öffnungen 16 können als Langlöcher ausgestaltet sein, die senkrecht zur Scheitellinie des Kantenschutzes 13 verlaufen. Durch Befestigungselemente, die durch die Öffnungen 16 und korrespondieren Schraubenlöcher in Kabelführungselementen einer Kabelführung befestigt werden, wird der Kabelführungsverbinder 10 an zwei unterschiedliche Kabelführungselementen befestigt, um diese miteinander zu verbinden.

Der Kabelführungsverbinder 10 kann in unterschiedlichen Montagepositionen eingesetzt werden. In der in Fig. 1 bis Fig. 3 und Fig. 9 dargestellten ersten Konfiguration, in der der erste Verbinderabschnitt 11 und der zweite Verbinderabschnitt 12 koplanar sind, kann der Kabelführungsverbinder 10 beabstandet von Ecken der Kabelführung entlang einer Seitenwand der Kabelführung montiert werden, um koplanar bzw. längs zueinander ausgerichtete Kabelführungselemente miteinander zu verbinden.

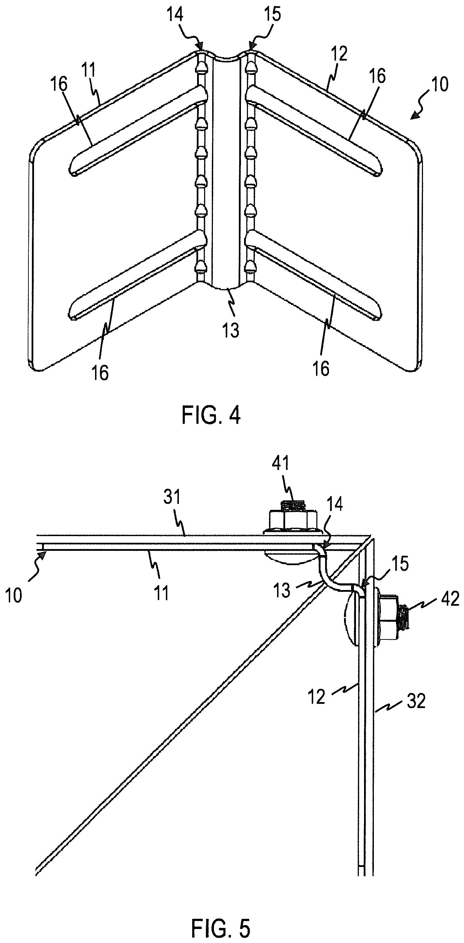

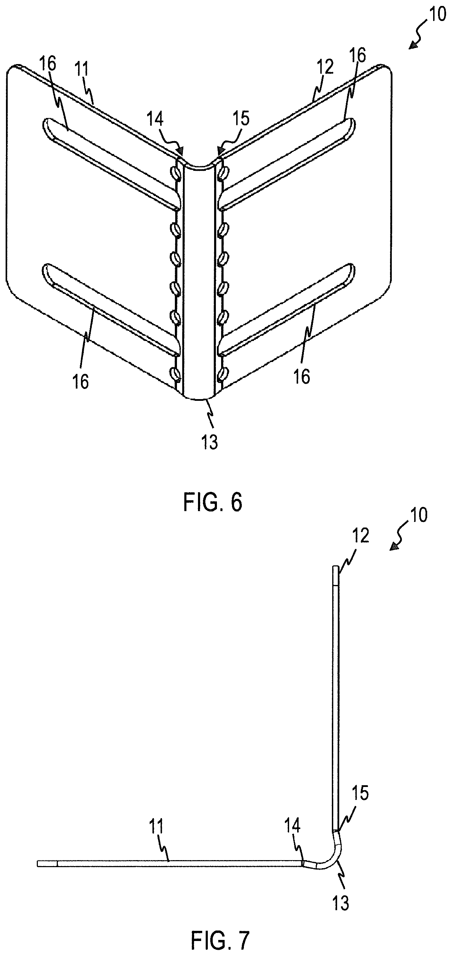

Durch ein Verbiegen des ersten Verbinderabschnitts 11 und des zweiten Verbinderabschnitts 12 relativ zum Kantenschutz 13 kann der Kabelführungsverbinder 10 in eine zweite Konfiguration, in der der Kabelführungsverbinder 10 zur Montage an einer Innenecke der Kabelführung konfiguriert ist (Fig. 4 und Fig. 5), und in eine dritte Konfiguration überführt werden, in der der Kabelführungsverbinder 10 zur Montage an einer Außenecke der Kabelführung konfiguriert ist (Fig. 6 bis Fig. 8).

Das Verbiegen kann bei Verwendung des Kabelführungsverbinders 10 manuell (z.B. per Hand) erfolgen. Sowohl die erste Schwächungszone 14 als auch die zweite Schwächungszone 15 können so ausgestaltet sein, dass sie ein manuelles Verbiegen des ersten Verbinderabschnitts 11 um die erste Schwächungszone 14 und des zweiten Verbinderabschnitt 12 um die zweite Schwächungszone 15 ermöglichen. Das entsprechende Verbiegen des Kabelführungsverbinders 10 kann vor Ort an der Montagestelle erfolgen, unmittelbar vor dem Befestigen des Kabelführungsverbinders 10 an Kabelführungselementen zum Verbinden der Kabelführungselemente.

Fig. 4 zeigt den Kabelführungsverbinder 10 in einer zweiten Konfiguration, und Fig. 5 zeigt den an einer Innenecke montierten Kabelführungsverbinder 10 in der zweiten Konfiguration. Der Kabelführungsverbinder 10 wird in die in Fig. 4 und Fig. 5 dargestellte zweite Konfiguration überführt, indem der erste Verbinderabschnitt 11 und der zweite Verbinderabschnitt 12 um die Schwächungszonen so relativ zum Kantenschutz 13 gebogen werden, dass der Kantenschutz 13 im Winkelbereich zwischen dem ersten Verbinderabschnitt 11 und dem zweiten Verbinderabschnitt 12 angeordnet ist. Auch wenn in Fig. 4 und Fig. 5 eine Konfiguration dargestellt ist, bei der der erste Verbinderabschnitt 11 und der zweite Verbinderabschnitt 12 in einem Winkel von 90° zueinander stehen, ist dies nicht zwingend der Fall. Beispielsweise können der erste Verbinderabschnitt 11 und der zweite Verbinderabschnitt 12 so um die Schwächungszonen 14, 15 gebogen werden, dass sie einen Winkel von mehr als 90° oder von weniger als 90° dazwischen einschließen, abhängig vom Winkel der Innenecke, an der der Kabelführungsverbinder 10 montiert wird.

Der Kabelführungsverbinder 10 wird durch Befestigungselemente 41, 42 an Kabelführungselementen 31, 32 befestigt. Die Befestigungselemente 41, 42 können beispielsweise Schrauben oder Gewindebolzen und korrespondierende Muttern aufweisen. Durch den Kabelführungsverbinder 10 werden die Kabelführungselemente 31, 32 aneinander befestigt. Der Winkel zwischen den Kabelführungselementen 31, 32 kann durch den Winkel zwischen dem ersten Verbinderabschnitt 11 und dem zweiten Verbinderabschnitt 12 festgelegt werden.

Die Kantenschutz 13 ragt bogenförmig in die Kabelführung hinein und verhindert, dass Kabel an einer scharfen Kante anliegen.

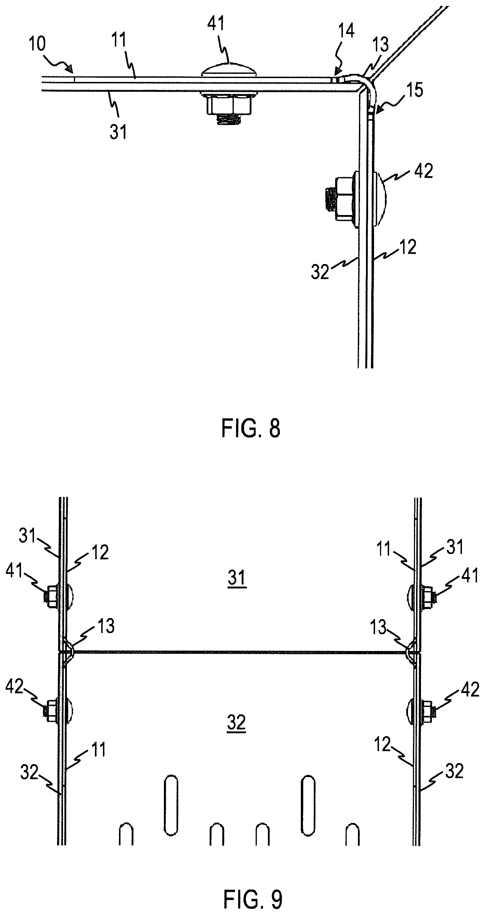

Fig. 6 zeigt den Kabelführungsverbinder 10 in einer dritten Konfiguration in einer Perspektivansicht, und Fig. 7 zeigt den Kabelführungsverbinder 10 in der dritten Konfiguration in einer Draufsicht. Fig. 8 zeigt den an einer Außenecke montierten Kabelführungsverbinder 10 in der dritten Konfiguration. Der Kabelführungsverbinder 10 wird in die in Fig. 6 bis Fig. 8 dargestellte dritte Konfiguration überführt, indem der erste Verbinderabschnitt 11 und der zweite Verbinderabschnitt 12 um die Schwächungszonen so relativ zum Kantenschutz 13 gebogen werden, dass der Kantenschutz 13 nicht in dem zwischen dem ersten Verbinderabschnitt 11 und dem zweiten Verbinderabschnitt 12 definierten Winkelbereich angeordnet ist. Der erste Verbinderabschnitt 11 und der zweite Verbinderabschnitt 12 werden also gleichsam vom Kantenschutz 13 weg gebogen. Auch wenn in Fig. 6 bis Fig. 8 eine Konfiguration dargestellt ist, bei der der erste Verbinderabschnitt 11 und der zweite Verbinderabschnitt 12 in einem Winkel von 90° zueinander stehen, ist dies nicht zwingend der Fall. Beispielsweise können der erste Verbinderabschnitt 11 und der zweite Verbinderabschnitt 12 so um die Schwächungszonen 14, 15 gebogen werden, dass sie einen Winkel von mehr als 90° oder von weniger als 90° dazwischen einschließen, abhängig vom Winkel der Außenecke, an der der Kabelführungsverbinder 10 montiert wird.

Der Kabelführungsverbinder 10 wird durch Befestigungselemente 41, 42 an Kabelführungselementen 31, 32 befestigt. Die Befestigungselemente 41, 42 können beispielsweise Schrauben oder Gewindebolzen und korrespondierende Muttern aufweisen. Durch den Kabelführungsverbinder 10 werden die Kabelführungselemente 31, 32 aneinander befestigt. Der Winkel zwischen den Kabelführungselementen 31, 32 kann durch den Winkel zwischen dem ersten Verbinderabschnitt 11 und dem zweiten Verbinderabschnitt 12 festgelegt werden.

Fig. 9 zeigt die Verwendung des Kabelführungsverbinders 10 an einer Seitenfläche einer Kabelführung, beabstandet von den Ecken der Kabelführung. Der Kabelführungsverbinder 10 wird in der in Fig. 1 bis Fig. 3 dargestellten ersten Konfiguration, in der der erste Verbinderabschnitt 11 und der zweite Verbinderabschnitt 12 koplanar sind, mit Kabelführungselementen 31, 32 verschraubt oder anderweitig daran befestigt. Der Kantenschutz 13 kann dabei in das Innere der Kabelführung hineinragen und eine Stoßfuge zwischen den Kabelführungselementen 31, 32 wenigstens teilweise überdecken.

Mehrere erfindungsgemäße Kabelführungsverbinder 10 können an einer Kabelführung verwendet werden, wobei die Kabelführungsverbinder 10 an einer oder mehreren der folgenden Montagepositionen angeordnet sind: Innenecken, Außenecken, Seitenwände.

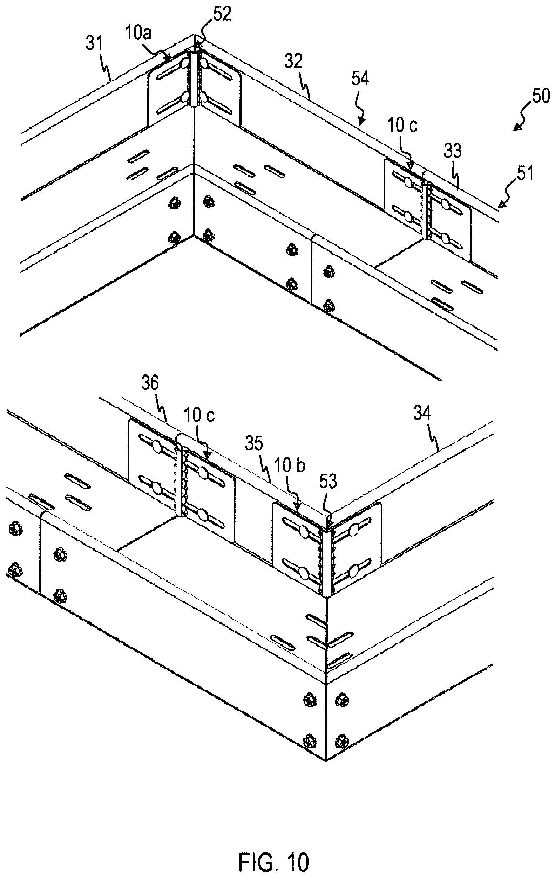

Fig. 10 ist eine Perspektivansicht einer Kabelführung 50. Die Kabelführung weist mehrere Kabelführungselemente auf, die kollektiv als Kabelführungselemente 51 bezeichnet werden und die die nachfolgend näher beschriebenen Kabelführungselemente 31 bis 36 aufweisen. Die Kabelführung 50 kann einen oder mehrere Kabelführungsverbinder 10a aufweisen, der an einer Innenecke 52 der Kabelführung 50 angeordnet ist und zwei winkelig zueinander angeordnete Kabelführungselemente 31, 32 miteinander verbindet. Die Kabelführung 50 kann alternativ oder zusätzlich einen oder mehrere Kabelführungsverbinder 10b aufweisen, der an einer Außenecke 53 der Kabelführung 50 angeordnet ist und zwei winkelig zueinander angeordnete Kabelführungselemente 34, 35 miteinander verbindet. Die Kabelführung 50 kann alternativ oder zusätzlich einen oder mehrere Kabelführungsverbinder 10c aufweisen, die an einer Seitenfläche 54 der Kabelführung 50 angeordnet sind und zwei koplanar zueinander angeordnete Kabelführungselemente 32, 33 oder 35, 36 miteinander verbindet. Die Kabelführungsverbinder 10a, 10b, 10c können jeweils erfindungsgemäße Kabelverbinder 10 sein. Abhängig von der jeweiligen Montageposition können die Kabelführungsverbinder in der ersten Konfiguration verwendet werden, in der die Verbinderabschnitte 11, 12 koplanar sind, oder können manuell in die zweite Konfiguration zur Verwendung an einer Innenecke 52 oder in die dritte Konfiguration zur Verwendung an einer Außenecke 53 gebogen werden, wie oben beschrieben.

Auch wenn in Fig. 10 die Innenecken und Außenecken jeweils einen Winkel von 90° definieren, können die Kabelführungsverbinder 10a, 10b in der zweiten oder dritten Konfiguration auch zu anderen Winkeln gebogen sein.

Fig. 11 zeigt eine Draufsicht des Kabelführungsverbinders 10a, 10b, bei dem der erste Verbinderabschnitt 11 und der zweite Verbinderabschnitt 12 relativ zum Kantenschutz 13 so gebogen sind, dass sie einen von 90° verschiedenen Winkel dazwischen definieren, um an einer nicht rechtwinkligen Ecke der Kabelführung verwendet zu werden.

Während Ausführungsbeispiele unter Bezugnahme auf die Figuren beschrieben wurden, können Abwandlungen bei weiteren Ausführungsbeispielen verwendet werden. Beispielsweise können die Kabelführungsverbinder und Verfahren nach Ausführungsbeispielen nicht nur bei Kabelkanälen, sondern auch bei Kabelrinnen eingesetzt werden.

Die Kabelführungsverbinder müssen nicht notwendig als Stanzteile hergestellt werden, sondern können unter Verwendung anderer Fertigungstechniken produziert werden. Der erfindungsgemäße Kabelführungsverbinder ist aus Metall hergestellt.

Auch wenn Ausführungsbeispiele detailliert beschrieben wurden, bei denen eine erste Schwächungszone 14 zwischen dem ersten Verbinderabschnitt 11 und dem Kantenschutz 13 angeordnet ist und bei denen eine zweite Schwächungszone 15 zwischen dem zweiten Verbinderabschnitt 12 und dem Kantenschutz 13 angeordnet ist, müssen nicht notwendig zwei Schwächungszonen vorhanden sein. Beispielsweise kann der zweite Verbinderabschnitt 12 unmittelbar an den Kantenschutz 13 angrenzen, ohne dass eine Schwächungszone zwischen dem zweiten Verbinderabschnitt 12 und dem Kantenschutz 13 vorhanden ist.

## Patentansprüche

1. Kabelführungsverbinder (10, 10a-10c) zum Verbinden von Kabelführungselementen (31-36, 51), aufweisend einen ersten Verbinderabschnitt (11) und einen zweiten Verbinderabschnitt (12),
einen Kantenschutz (13), der zwischen dem ersten Verbinderabschnitt (11) und dem zweiten Verbinderabschnitt (12) angeordnet ist und eine gekrümmte Oberfläche aufweist, welche angepasst ist im montierten Zustand des Kabelführungsverbinders (10, 10a-10c) eine Kante zu überdecken,
wobei die gekrümmte Oberfläche an einer ersten Seite einer Ebene (23) hervorragt, die durch den ersten Verbinderabschnitt (11) und den zweiten Verbinderabschnitt (12) definiert wird, wenn der erste und zweite Verbinderabschnitt (11, 12) in einer ersten Konfiguration des Kabelführungsverbinders (10; 10a-10c) koplanar angeordnet sind, und
wenigstens eine Schwächungszone (14, 15), die eine Linie mit reduzierter Dicke oder eine Folge von entlang einer Linie angeordneten Durchbrüchen in dem Kabelführungsverbinder (10; 10a-10c) aufweist und parallel zu einem Scheitel der gekrümmten Oberfläche des Kantenschutzes (13) verläuft, wobei die wenigstens eine Schwächungszone (14, 15) konfiguriert ist, ein Verbiegen wenigstens eines Verbinderabschnitts (11, 12) der ersten und zweiten Verbinderabschnitte (11, 12) relativ zum Kantenschutz (13) zu ermöglichen, wobei der wenigstens eine Verbinderabschnitt (11, 12) um die wenigstens eine Schwächungszone (14, 15) in zwei unterschiedliche Richtungen (25, 26) biegbar ist, um eine Montage des Kabelführungsverbinders (10; 10a-10c) sowohl an einer Innenecke (52) als auch an einer Außenecke (53) einer Kabelführung (50) zu erlauben,
wobei der erste Verbinderabschnitt (11), der zweite Verbinderabschnitt (12), der Kantenschutz (13) und die wenigstens eine Schwächungszone (14, 15) einstückig als ein Blechteil ausgebildet sind,
wobei die wenigstens eine Schwächungszone (14, 15) eine zwischen dem ersten Verbinderabschnitt (11) und dem Kantenschutz (13) angeordnete erste solche Schwächungszone (14) und eine zwischen dem zweiten Verbinderabschnitt (12) und dem Kantenschutz (13) angeordnete zweite solche Schwächungszone (15) aufweist,
wobei die gekrümmte Oberfläche teilkreisförmig ist und bauchig an der ersten Seite der Ebene (23) hervorragt, die durch den ersten Verbinderabschnitt (11) und den zweiten Verbinderabschnitt (12) definiert wird, wenn der erste und zweite Verbinderabschnitt (11, 12) in einer ersten Konfiguration des Kabelführungsverbinders (10; 10a-10c) koplanar angeordnet sind, und wobei
eine Dicke am Kantenschutz (13) gleich einer Dicke des ersten Verbinderabschnitts (11) und des zweiten Verbinderabschnitts (12) ist.

2. Kabelführungsverbinder nach Anspruch 1,
wobei der wenigstens eine Verbinderabschnitt (11, 12) aus der ersten Konfiguration um die wenigstens eine Schwächungszone (14, 15)
in Richtung der ersten Seite (21) biegbar ist, um den Kabelführungsverbinder (10; 10a-10c) für eine Verwendung an der Innenecke (52) vorzubereiten, und
in Richtung einer zur ersten Seite (21) entgegengesetzten zweiten Seite (22) biegbar ist, um den Kabelführungsverbinder (10; 10a-10c) für eine Verwendung an der Außenecke (53) vorzubereiten.

3. Kabelführungsverbinder nach Anspruch 1 oder Anspruch 2,
wobei der Kabelführungsverbinder (10; 10a-10c) in der ersten Konfiguration zum Verbinden von zueinander ausgerichteten Kabelführungselementen (32, 33) an einer Seite der Kabelführung (50) konfiguriert ist.

4. Kabelführungsverbinder nach einem der vorhergehenden Ansprüche,
wobei der erste Verbinderabschnitt (11) und der zweite Verbinderabschnitt (12) jeweils wenigstens eine Öffnung (16) zum Durchführen eines Befestigungselements (41-44) aufweisen.

5. Kabelführungsverbinder nach Anspruch 4,
wobei der erste Verbinderabschnitt (11) und der zweite Verbinderabschnitt (12) jeweils wenigstens zwei Langlöcher (16) zum Durchführen von Befestigungselementen (41-44) aufweisen,
wobei optional die wenigstens zwei Langlöcher (16) parallel zu einer Längsachse (17) des Kabelführungsverbinders (10; 10a-10c) und transversal zu der wenigstens einen Schwächungszone (14, 15) angeordnet sind.

6. Kabelführungsverbinder nach einem der vorhergehenden Ansprüche,
wobei die wenigstens eine Schwächungszone (14, 15) so konfiguriert ist, dass beim Verbiegen des wenigstens eines Verbinderabschnitts (11, 12) relativ zum Kantenschutz (13) der Kantenschutz (13) seine Form beibehält.

7. Kabelführungsverbinder nach einem der vorhergehenden Ansprüche,
wobei sich die erste Schwächungszone (14) und die zweite Schwächungszone (15) linienartig über die gesamte Breite (18) des Kabelführungsverbinders (10) erstrecken.

8. Kabelführung, aufweisend
mehrere Kabelführungselemente (31-36; 51) und
wenigstens einen Kabelführungsverbinder (10; 10a-10c) nach einem der vorhergehenden Ansprüche zum Verbinden der Kabelführungselemente (31-36; 51).

9. Kabelführung nach Anspruch 8, aufweisend
wenigstens einen ersten Kabelführungsverbinder (10a), der an einer Innenecke (52) der Kabelführung (50) montiert ist, und
wenigstens einen zweiten Kabelführungsverbinder (10b), der an einer Außenecke (53) der Kabelführung (50) montiert ist, und optional
wenigstens einen dritten Kabelführungsverbinder (10; 10c), der an einer Seitenfläche (54) der Kabelführung (50) beabstandet von Ecken der Kabelführung (50) montiert ist,
wobei der wenigstens eine erste Kabelführungsverbinder (10a), der wenigstens eine zweite Kabelführungsverbinder (10b) und der optionale wenigstens eine dritte Kabelführungsverbinder (10c) jeweils ein Kabelführungsverbinder (10; 10a-10c) nach einem der Ansprüche 1 bis 7 sind.

10. Verfahren zum Verbinden von Kabelführungselementen (31, 32), aufweisend die Schritte:
Vorbereiten eines Kabelführungsverbinders (10; 10a-10c) nach einem der Ansprüche 1 bis 7 zum Befestigen mehrerer Kabelführungselementen (31-39) aneinander;
wobei das Vorbereiten des Kabelführungsverbinders (10; 10a-10c) abhängig von einer Montagestelle des Kabelführungsverbinders (10; 10a-10c) einen der folgenden Schritte aufweist:
Verbiegen wenigstens eines Verbinderabschnitts (11, 12) der ersten und zweiten Verbinderabschnitte (11, 12) relativ zum Kantenschutz (13) um die wenigstens eine Schwächungszone (14, 15) in einer ersten Richtung (25) für eine Montage an einer Innenecke (52) der Kabelführung (50),
Verbiegen wenigstens eines Verbinderabschnitts (11, 12) relativ zum Kantenschutz (13) um die wenigstens eine Schwächungszone (14, 15) in einer zu der ersten Richtung (25) entgegengesetzten zweiten Richtung (26) für eine Montage an einer Außenecke (53) der Kabelführung (50),
Verwendung des Kabelführungsverbinders (10; 10c) in einer Konfiguration, in der der erste Verbinderabschnitt (11) und der zweite Verbinderabschnitt (12) koplanar sind, für eine Montage an einer Seitenfläche (54) der Kabelführung (50); und
Befestigen von wenigstens zwei Kabelführungselementen (31, 32) aneinander unter Verwendung des vorbereiteten Kabelführungsverbinders (10; 10a-10c).

11. Verfahren nach Anspruch 10,
wobei der erste und zweite Verbinderabschnitt (11, 12) für eine Montage des Kabelführungsverbinders (10; 10a-10c) an der Innenecke (52) der Kabelführung (50) in Richtung der ersten Seite (21) und für eine Montage des Kabelführungsverbinders (10; 10a-10c) an der Außenecke (53) der Kabelführung in Richtung einer zur ersten Seite (21) entgegengesetzten zweiten Seite (22) umgebogen werden.

12. Verfahren nach Anspruch 10 oder Anspruch 11,
wobei wenigstens ein erster Kabelführungsverbinder (10; 10a) nach einem der Ansprüche 1 bis 7 an einer Innenecke (52) der Kabelführung (50) montiert wird, und wobei wenigstens ein zweiter Kabelführungsverbinder (10; 10b) nach einem der Ansprüche 1 bis 7 an einer Außenecke (53) der Kabelführung (50) montiert wird.

13. Verfahren nach Anspruch 12, wobei wenigstens ein dritter Kabelführungsverbinder (10; 10c) nach einem der Ansprüche 1 bis 7 an einer Seitenfläche (54) der Kabelführung (50) montiert wird.

## Claims

1. A cable guidance connector (10, 10a-10c) for connecting cable guidance elements (31-36, 51), comprising:
a first connector section (11) and a second connector section (12),
an edge guard (13) arranged between the first connector section (11) and the second connector section (12) and comprising a curved surface which is configured to overlap an edge in the assembled state of the cable guidance connector (10, 10a-10c),
wherein the curved surface protrudes from a first side of a plane (23) that is defined by the first connector section (11) and the second connector section (12) when the first and second connector sections (11, 12) are arranged in a coplanar fashion in a first configuration of the cable guidance connector (10; 10a-10c), and
at least one weakening zone (14, 15) comprising a line with reduced thickness or a series of cutouts disposed along a line in the cable guidance connector (10; 10a-10c) and extending in parallel to an apex of the curved surface of the edge guard (13), wherein the at least one weakening zone (14, 15) is configured to allow bending of at least one connector section (11, 12) of the first and second connector sections (11, 12) relative to the edge guard (13), wherein the at least one connector section (11, 12) is bendable around the at least one weakening zone (14, 15) in two different directions (25, 26) in order to allow for installation of the cable guidance connector (10; 10a-10c) in both an inner corner (52) and an outer corner (53) of a cable guide (50),
wherein the first connector section (11), the second connector section (12), the edge guard (13) and the at least one weakening zone (14, 15) are integrally configured as a sheet metal part,
wherein the at least one weakening zone (14, 15) comprises a first such weakening zone (14) disposed between the first connector section (11) and the edge guard (13) and a second such weakening zone (15) disposed between the second connector section (12) and the edge guard (13),
wherein the curved surface is partial-circular and protrudes from the first side of the plane (23) in a bulbous manner, the plane being defined by the first connector section (11) and the second connector section (12) when the first and second connector sections (11, 12) are arranged coplanarly in a first configuration of the cable guidance connector (10; 10a-10c), and wherein
a thickness at the edge guard (13) is equal to a thickness of the first connector section (11) and the second connector section (12).

2. The cable guidance connector according to claim 1,
wherein the at least one connector section (11, 12) is bendable around the at least one weakening zone (14, 15) from the first configuration
in the direction of the first side (21) in order to prepare the cable guidance connector (10; 10a-10c) for use at the inner corner (52), and
in the direction of a second side (22) opposite the first side (21) in order to prepare the cable guidance connector (10; 10a-10c) for use at the outer corner (53).

3. The cable guidance connector according to claim 1 or claim 2,
wherein in the first configuration the cable guidance connector (10; 10a-10c) is configured for connecting cable guidance elements (32, 33) at a side of the cable guide (50), said cable guidance elements being aligned to each other.

4. The cable guidance connector according to any one of the preceding claims,
wherein the first connector section (11) and the second connector section (12) each comprise at least one opening (16) for passing through a fastening element (41-44).

5. The cable guidance connector according to claim 4,
wherein the first connector section (11) and the second connector section (12) each comprise at least two elongate holes (16) for passing through fastening elements (41-44),
wherein optionally the at least two elongate holes (16) are arranged in parallel to a longitudinal axis (17) of the cable guidance connector (10; 10a-10c) and transversally to the at least one weakening zone (14, 15).

6. The cable guidance connector according to any one of the preceding claims,
wherein the at least one weakening zone (14, 15) is configured such that the edge guard (13) retains its shape when the at least one connector section (11, 12) is bent relative to the edge guard (13).

7. The cable guidance connector according to any one of the preceding claims,
wherein the first weakening zone (14) and the second weakening zone (15) extend linearly over the complete width (18) of the cable guidance connector (10).

8. A cable guide, comprising
a plurality of cable guidance elements (31-36; 51) and
at least one cable guidance connector (10; 10a-10c) according to any one of the preceding claims for connecting the cable guidance elements (31-36; 51).

9. The cable guide according to claim 8, comprising
at least one first cable guidance connector (10a) installed at an inner corner (52) of the cable guide (50), and
at least one second cable guidance connector (10b) installed at an outer corner (53) of the cable guide (50), and optionally
at least one third cable guidance connector (10; 10c) installed at a lateral surface (54) of the cable guide (50) at a distance from corners of the cable guide (50),
wherein the at least one first cable guidance connector (10a), the at least one second cable guidance connector (10b) and the optional, at least one third cable guidance connector (10c) are each a cable guidance connector (10; 10a-10c) according to any one of claims 1 to 7.

10. A method for connecting cable guidance elements (31, 32), comprising the steps of:
preparing a cable guidance connector (10; 10a-10c) according to any one of claims 1 to 7 for attaching to each other a plurality of cable guidance elements (31-39);
wherein, depending on an installation point of the cable guidance connector (10; 10a-10c), the step of preparing the cable guidance connector (10; 10a-10c) comprises one of the following steps:
bending at least one connector section (11, 12) of the first and second connector sections (11, 12) relative to the edge guard (13) around the at least one weakening zone (14, 15) in a first direction (25) for installation at an inner corner (52) of the cable guide (50),
bending at least one connector section (11, 12) relative to the edge guard (13) around the at least one weakening zone (14, 15) in a second direction (26) opposite the first direction (25) for installation at an outer corner (53) of the cable guide (50),
using the cable guidance connector (10; 10c) in a configuration in which the first connector section (11) and the second connector section (12) are coplanar, for installation on a lateral surface (54) of the cable guide (50); and
attaching to each other at least two cable guidance elements (31, 32) using the prepared cable guidance connector (10; 10a-10c).

11. The method according to claim 10,
wherein the first and second connector sections (11, 12) are bent for installation of the cable guidance connector (10; 10a-10c) at the inner corner (52) of the cable guide (50) in the direction of the first side (21) and for installation of the cable guidance connector (10; 10a-10c) at the outer corner (53) of the cable guide (50) in the direction of a second side (22) opposite the first side (21).

12. The method according to claim 10 or claim 11,
wherein at least one first cable guidance connector (10; 10a) according to any one of claims 1 to 7 is installed at an inner corner (52) of the cable guide (50), and wherein at least one second cable guidance connector (10; 10b) according to any one of claims 1 to 7 is installed at an outer corner (53) of the cable guide (50).

13. The method according to claim 12, wherein at least one third cable guidance connector (10; 10c) according to any one of claims 1 to 7 is installed at a lateral side (54) of the cable guide (50).

## Revendications

1. Connecteur de guidage de câble (10, 10a-10c) pour le raccordement d'éléments de guidage de câble (31-36,51), comprenant
une première partie de connecteur (11) et une deuxième partie de connecteur (12), une protection de bord (13) présentée entre la première partie de connecteur (11) et la deuxième partie de connecteur (12) et ayant une surface incurvée adaptée pour recouvrir un bord en état de montage du connecteur de guidage de câble (10, 10a-10c),
la surface incurvée faisant saillie sur la première face d'un plan (23) défini par la première partie de connecteur (11) et la deuxième partie de connecteur (12), quand la première et la deuxième parties de connecteur (11, 12) sont disposées de manière coplanaire dans une première configuration du connecteur de guidage de câble (10 ; 10a-10c), et
au moins une zone de moindre résistance (14, 15), présentant une ligne d'épaisseur réduite ou une série de perforations disposées le long d'une ligne dans le connecteur de guidage de câble (10 ; 10a-10c), et s'étendant parallèlement à un sommet de la surface incurvée de la protection de bord (13), ladite au moins une zone de moindre résistance (14, 15) étant prévue pour permettre un pliage d'au moins une partie de connecteur (11, 12) entre la première et la deuxième parties de connecteur (11, 12) par rapport à la protection de bord (13), ladite au moins une partie de connecteur (11, 12) étant pliable dans deux directions différentes (25, 26) autour de ladite au moins une zone de moindre résistance (14, 15) pour permettre un montage du connecteur de guidage de câble (10; 10a-10c) tant sur un coin intérieur (52) que sur un coin extérieur (53) d'un guidage de câble (50),
la première partie de connecteur (11), la deuxième partie de connecteur (12), la protection de bord (13) et ladite au moins une zone de moindre résistance (14, 15) étant réalisés d'un seul tenant comme pièce en tôle,
ladite au moins une zone de moindre résistance (14, 15) présentant une première zone de moindre résistance correspondante (14) entre la première partie de connecteur (11) et la protection de bord (13) et une deuxième zone de moindre résistance correspondante (15) entre la deuxième partie de connecteur (12) et la protection de bord (13),
la surface incurvée étant en arc de cercle et faisant saillie de manière bombée sur la première face du plan (23) défini par la première partie de connecteur (11) et la deuxième partie de connecteur (12), quand la première et la deuxième parties de connecteur (11, 12) sont disposées de manière coplanaire dans une première configuration du connecteur de guidage de câble (10 ; 10a-10c), et
une épaisseur sur la protection de bord (13) étant égale à une épaisseur de la première partie de connecteur (11) et de la deuxième partie de connecteur (12).

2. Connecteur de guidage de câble selon la revendication 1,
où ladite au moins une partie de connecteur (11, 12) peut être pliée à partir de la première configuration autour de ladite au moins une zone de moindre résistance (14, 15)
dans la direction de la première face (21) pour préparer le connecteur de guidage de câble (10 ; 10a-10c) pour une utilisation sur le coin intérieur (52), et
dans la direction d'une deuxième face (22) opposée à la première face (21) pour préparer le connecteur de guidage de câble (10 ; 10a-10c) pour une utilisation sur le coin extérieur (53).

3. Connecteur de guidage de câble selon la revendication 1 ou la revendication 2, où le connecteur de guidage de câble (10 ; 10a-10c) est prévue dans la première configuration pour raccorder des éléments de guidage de câble (32, 33) alignés sur une face du guidage de câble (50).

4. Connecteur de guidage de câble selon l'une des revendications précédentes, où la première partie de connecteur (11) et la deuxième partie de connecteur (12) présentent chacune au moins une ouverture (16) pour le passage d'un élément de fixation (41-44).

5. Connecteur de guidage de câble selon la revendication 4,
où la première partie de connecteur (11) et la deuxième partie de connecteur (12) présentent chacune au moins deux trous oblongs (16) pour le passage d'éléments de fixation (41-44),
où les au moins deux trous oblongs (16) sont facultativement disposés parallèlement à un axe longitudinal (17) du connecteur de guidage de câble (10 ; 10a-10c) et transversalement à ladite au moins une zone de moindre résistance (14, 15).

6. Connecteur de guidage de câble selon l'une des revendications précédentes, où ladite au moins une zone de moindre résistance (14, 15) est prévue de telle manière que la protection de bord (13) conserve sa forme en cas de pliage de ladite au moins une partie de connecteur (11, 12) par rapport à la protection de bord (13).

7. Connecteur de guidage de câble selon l'une des revendications précédentes,
où la première zone de moindre résistance (14) et la deuxième zone de moindre résistance (15) s'étendent linéairement sur toute la largeur (18) du connecteur de guidage de câble (10).

8. Guidage de câble, comprenant
plusieurs éléments de guidage de câble (31-36 ; 51), et
au moins un connecteur de guidage de câble (10 ; 10a-10c) selon l'une des revendications précédentes pour le raccordement des éléments de guidage de câble (31-36 ; 51).

9. Guidage de câble selon la revendication 8, comprenant
au moins un premier connecteur de guidage de câble (10a) monté sur un coin intérieur (52) du guidage de câble (50), et
au moins un deuxième connecteur de guidage de câble (10b) monté sur un coin extérieur (53) du guidage de câble (50), et, facultativement,
au moins un troisième connecteur de guidage de câble (10 ; 10c) monté sur une surface latérale (54) du guidage de câble (50) à distance des coins du guidage de câble (50),
où ledit au moins un premier connecteur de guidage de câble (10a), ledit au moins un deuxième connecteur de guidage de câble (10b) et ledit au moins un troisième connecteur de guidage de câble facultatif (10c) sont chacun un connecteur de guidage de câble (10 ; 10a-10c) selon l'une des revendications 1 à 7.

10. Procédé de raccordement d'éléments de guidage de câble (31, 32), comprenant les étapes suivantes :
préparation d'un connecteur de guidage de câble (10 ; 10a-10c) selon l'une des revendications 1 à 7 pour la fixation de plusieurs éléments de guidage de câble (31-39) l'un contre l'autre ;
où la préparation du connecteur de guidage de câble (10 ; 10a-10c) comprend une des étapes suivantes, en fonction d'un emplacement de montage du connecteur de guidage de câble (10 ; 10a-10c) :
pliage d'au moins une partie de connecteur (11, 12) entre la première et la deuxième parties de connecteur (11, 12) par rapport à la protection de bord (13), autour de ladite au moins une zone de moindre résistance (14, 15) dans une première direction (25) pour un montage sur un coin intérieur (52) du guidage de câble (50),
pliage d'au moins une partie de connecteur (11, 12) par rapport à la protection de bord (13), autour de ladite au moins une zone de moindre résistance (14, 15) dans une deuxième direction (26) opposée à la première direction (25) pour un montage sur un coin extérieur (53) du guidage de câble (50),
utilisation du connecteur de guidage de câble (10 ; 10c) dans une configuration où la première partie de connecteur (11) et la deuxième partie de connecteur (12) sont coplanaires, pour un montage sur une surface latérale (54) du guidage de câble (50) ; et
fixation d'au moins deux éléments de guidage de câble (31, 32) l'un contre l'autre en recourant au connecteur de guidage de câble (10 ; 10a-10c) préparé.

11. Procédé selon la revendication 10,
où, pour un montage du connecteur de guidage de câble (10 ; 10a-10c) sur le coin intérieur (52) du guidage de câble (50), la première et la deuxième parties de connecteur (11, 12) sont pliées dans la direction la première face (21), et sont pliées dans la direction d'une deuxième face (22) opposée à la première face (21) pour un montage du connecteur de guidage de câble (10 ; 10a-10c) sur le coin extérieur (53) du guidage de câble.

12. Procédé selon la revendication 10 ou la revendication 11,
où au moins un premier connecteur de guidage de câble (10 ; 10a) selon l'une des revendications 1 à 7 est monté sur un coin intérieur (52) du guidage de câble (50), et où au moins un deuxième connecteur de guidage de câble (10 ; 10b) selon l'une des revendications 1 à 7 est monté sur un coin extérieur (53) du guidage de câble (50).

13. Procédé selon la revendication 12, où au moins un troisième connecteur de guidage de câble (10 ; 10c) selon l'une des revendications 1 à 7 est monté sur une surface latérale (54) du guidage de câble (50).
